# EUROPEAN PATENT APPLICATION

(11) **EP 1 528 366 A1**
(43) Date of publication of application: **04.05.2005**
(21) Application number: 04023246.4
(22) Date of filing: 29.09.2004
(51) Int. Cl.: G01D 5/347, B60Q 1/40

(54) **Position encoder with colour coded scale**

(30) Priority: 29.10.2003 US 694863
(71) Applicant: Su, Wen-Wei, Chiunglin Shiang Hsinch City (TW)
(72) Inventor: Su, Wen-Wei, Chiunglin Shiang Hsinch City (TW)
(74) Representative: Viering, Jentschura & Partner

(57) **Abstract**

A sensor for detecting the turning angle of a rotation shaft is separated a certain distance away from the shaft. The sensor comprises a light source for emitting light beams to a graduated color means mounted on the shaft and a light reader for reading the corresponding reflected light beams back from the graduated color means. The graduated color means is a longitudinal sheet of film and attached onto the surface of the shaft in its circumference direction thereby rotating with the shaft synchronously. A serial of color points are formed on the graduated color means along its longitudinal direction. The color points are arranged so as to the reflectivity thereof vary according to the requirements of the sensor.

## Description

### TECHNICAL FIELD

The present invention relates to an angle detecting sensor and a vehicular controlling system using the same, especially to a sensor which can detect the turning angle of a rotation shaft by employing a graduated color means and a pair of light source and reader, and a vehicular system using the sensor to automatically control corresponding turn indicators to turn on or off.

### DESCRIPTION OF RELATED ARTS

Various devices or systems have been designed to control vehicle's turn indicators for indicating whether the vehicle is turning and/or in which direction it is turning.

One type of said controlling system for vehicle's turn indicator can refer to USP 5,955,944 (hereinafter as '944) which is specially designed for an automobile such as a car. It essentially comprises, in combination, an automobile steering wheel having an annular handle, a hub adapted to be coupled to a steering column of an automobile, spokes disposed about the hub and horizontally extended outward therefrom to the handle, and a switch holes or cavities disposed on the hub, handle and/or spokes near the periphery thereof. A turn signal indicator is included and formed of a pair of push button switches with each push button switch extended through a separate switch hole to thereby define a left push button switch and a right push button switch.

The push buttons may also be manually operated handle points as disclosed in USP 4,839,579 (hereinafter referred as '579). The handle points are located between the steering wheel and a turning switch assembly, and are connected with steering wheel by first and second gears thereby rotating with the wheel synchronously and producing corresponding signals to the turning switch assembly for controlling according indicators to turn on or off.

USP 6,034,600 (hereinafter as '600) also provides a vehicle turn signal system utilizing turn selectors located on a steering wheel. The system has right and left turn signal indicator circuits that are each energizable to indicate an intended movement of the vehicle toward the right or left respectively. A micro-controller controls the energization of the right and left turn indicator circuits. Each of the right and left selectors is actuatable in a first manner for causing the micro-controller to energize the respective indicator circuit to perform a first indication operation and actuatable in a second manner for causing the micro-controller to energize the respective indicator circuit to perform a second indication operation. In one embodiment, the first manner of selector actuation is a relatively short duration actuation, and the second manner of selector is a relatively long duration actuation. Also, in one embodiment, the first indication operation is a timed duration indication for lane changing and the second indication operation is conventional turn indication (e.g., indication until cancelled).

The vehicular turn indicator systems as discussed above in '600, '579 and '944 all need essentially manual control of selectors (in forms of buttons or handle points, etc.) to turn on or off corresponding turn indicators. That means the driver has to push or press the right or left selector when he wants to turn the vehicle in right or left direction, and may also have to return the corresponding selector when the turn is completed. Hence, according turn indicating lamp is turned on or turned off to warn pedestrian or other vehicles around.

Another controlling system for vehicle be exampled in USP 4,030,066 (hereinafter briefed as '066) adopts a double throw switch. The automatic cancellation of a turn signal in '066 is controlled by a gyroscope, which provides an effective and reliable cancellation operation, except possibly on the slightest degree of turn, as may be experienced for example in a lane change. A manually operated double throw switch is moved from a neutral open switch position to one of two closed switch positions to energize a flasher circuit for actuating either a left turn or right turn signal. The manual switch is retained in the selected closed position by a detent latch structure, or the like.

When the vehicle is then turned in the direction as indicated, a gyroscope mounted on the vehicle is caused to precess; and when the turn is completed, a resilient restraining means causes the gyroscope to return to its starting position. This precession movement of the gyroscope and particularly the return movement are utilized to cancel the turn signal. Thus, it will be appreciated that turn signal cancellation results from a change in heading or direction of the vehicle, and is accomplished independently of either the lean of the vehicle or the movement of its steering column.

As we know, a very important key problem of a turn indicator controlling system for an automobile is how to get the information or signals of the turning angle of the steering wheel. Common measures in the existing prior arts as also cited above are to adopt suitable rotation sensors to detect the turning angle of a steering wheel and the rotation sensors usually are installed on a rotation shaft or column which is directly connected to the steering wheel and is driven to rotate by the same. Hence, the problem of detecting the turning angle of the steering wheel is then essentially changed to the question of measuring the turning angle of a rotation shaft.

Rotation sensors traditionally can be a gyro as in '066 which can be installed concentrically around the shaft connected with the steering wheel so that the turning angle of the wheel can be judged by detecting the turning angle of the shaft. There are also various devices except the gyro mechanism to detect the turning angle of a rotating shaft, such as a resonant rotation rate sensor which employs a resonant fork structure usually made of alpha quartz as provided in USP 4,899,587, USP 5,284,059 and USP 5,796,002, etc.

Capacitive transducers are also widely used to detect the turning angle of a rotation shaft; such patents include USP 3,732,553, USP 4,864,295, USP 5,099,386, USP 5,537,109 and USP 6,218,803, etc. A capacitive transducer commonly comprises two stationary capacitive plates and a movable plate mounted on a rotation shaft so that the movable plate can be driven to rotate by the rotation shaft. The movable plate can be conductive or dielectric and is sandwiched between the two stationary plates. The capacitance of the transducer is determined by the rotation position of the movable plate so that the turning angle of the shaft can be detected by measuring the capacitance of the transducer.

As analyzed above, at present we commonly employ rotation sensors to detect the turning angle of the steering wheel of a vehicle. The rotation sensors usually need to be mounted on a rotation shaft or column which is fixedly connected to the steering wheel so that the turning angle of the steering wheel can be calculated by detecting the turning angle of the shaft. The rotation sensors then can usually apply signals indicating the turning status of the automobile to devices of the vehicle controlling according indicators or lamps to turn on or turn off. A similar application was filed under the title of "Vehicular Turning Indicator" by the same inventor of the present invention in September this year.

However, since the sensors are directly mounted on the rotation shaft of the steering wheel, the long time rotating movement and shake or librations of the shaft and the running automobile will inevitably cause the connections between the sensor and the shaft to become loose, and even cause the sensors to slip or fall off from the shaft, thereby adversely affecting the sensitivity of the sensors and even disabling them. Moreover, working in the rotation and shake or librations environment for long time, the sensors are also easy to produce errors or become broken due to fatigue reasons. Once errors occur or the sensors are broken, it is quite inconvenient and complex to repair or to replace them since they are installed on the steering shaft connected to the wheel, and the according costs are also not cheap.

Further, the steering shafts provided by different manufacturers may have different diameters, so that the entire prior rotation sensors must be replaced according to the different shafts. It's very inconvenient and may cause the costs thereof increase in production and/or repair thereof.

Therefore, there exists a realistic demand for a new type sensor which can detect a turning angle of a rotation shaft while not require to be mounted on the shaft as a whole and the replacement or production thereof become very convenient and economic thereby avoiding the above discussed possible problems.

Accordingly, a new controlling system using said new type sensor is also on demand which can automatically control vehicle's turn indicator to turn on or off in a completely different way from the prior arts so as to avoid the shortcomings of the cited prior arts using traditional rotation sensors.

### SUMMARY OF THE INVENTION

A main object of the present invention is to provide a new sensor particularly for detecting the turning angle of a rotation shaft while not require to be mounted on the shaft.

A second object of the present invention is to provide a detecting device comprising a graduated color means mounted on a rotation shaft and a sensor located a certain distance away from the shaft for detecting the movement of the rotation shaft by detecting the graduated means.

A third object of the present invention is to provide a detecting device comprising a sensor separated from a rotation shaft connected to a vehicle's steering wheel and a graduated color means mounted on the rotation shaft, the size and arrangement of the graduated color means can be adjusted according to the shaft so that the detecting device can be used according to various requirements.

A fourth object of the present invention is to provide a vehicular controlling system using a sensor which need not to be mounted on the shaft fixedly connected to its steering wheel for detecting the turning angle of the shaft, so that the according repair or replacement is easy and convenient when errors occur to the sensor thereby ensuring the normal work of the whole system.

A fifth object of the present invention is to provide a vehicular turn indicator control system using a detecting device which comprises a sensor and a graduated color means mounted on the shaft connected to the steering wheel of the vehicle, and the size and arrangement of the graduated color means can be adjusted according to the shaft thereby the vehicular controlling system can be used in various vehicles.

A sixth object of the present invention is to provide a detecting device including a graduated color means mounted on an object and a sensor which can detect the linear and/or rotating movement of the object by detecting light intensity changes of the light beams reflected back from the graduated means.

In order to achieve the objects set forth, a sensor for detecting the turning angle of a rotation shaft in accordance with the present invention is separated a certain distance away from the shaft. The sensor comprises a light source for emitting light beams to a graduated color means mounted on the shaft and a light reader for reading corresponding reflected light beams back from the graduated color means.

The graduated color means is a longitudinal sheet of film in this embodiment and attached onto the surface of the shaft in its circumference direction thereby rotating with the shaft synchronously. A serial of color points with different hues, values, and/or chromas are formed on the graduated color means along its longitudinal direction. The color points are arranged so as to the reflectivity thereof vary according to the requirements of the sensor. The color points of the graduated means can vary from light colors to dark colors and may be consisted of white, grayish, grey, dark grey and black points.

The sensor also connects to a micro-processor for calculating the turning angle of the rotation shaft according to the light intensity changes of the corresponding reflected light beams and producing according signals.

In accordance with the present invention, a detecting device for detecting the turning angle of a rotation shaft is provided to comprise a graduated color means mounted on the shaft and a pair of light source and reader separated a certain distance away from the shaft for detecting the graduated color means. The light source emits light beams to the graduated color means; the light reader receives the corresponding reflected light beams and reads out the light intensity changes of the reflected light beams. The detecting device connects to a micro-processor calculates the turning angle of the rotation shaft according to the light intensity changes of the reflected light beams.

The present invention also provides a method for detecting the turning angle of a rotation shaft, comprising the steps of: step 1: mount a graduated color means onto the shaft thereby rotating with the shaft synchronously; step 2: locate a pair of light source and reader beside the shaft; step 3: the light source and reader emits a first light beam to the graduated color means and receives a first reflected light beam; step 4: the light source and reader emits a second light beam to the graduated color means and receives a second reflected light beam; and step 5: calculating the turning angle of the shaft according to the light intensity changes of the first and second reflected light beams.

In step 1, the graduated color means is a longitudinal sheet of film and attached onto the surface of the shaft in its circumference direction thereby rotating with the shaft synchronously. The graduated color means forms a serial of color points thereon along its longitudinal direction and the color points are arranged so as to the reflectivity thereof vary according to the requirements of the sensor.

In step 2, the light source and reader is separated a certain distance away from the shaft for detecting the graduated color means. The light source of step 3 emits first and second light beams to the graduated color means and the light reader of step 4 receives the corresponding first and second reflected light beams and reads out the light intensity changes of the reflected light beam. In step 4, the sensor also connects to a micro-processor for calculating the turning angle of the rotation shaft according to the light intensity changes of the first and second reflected light beams and producing corresponding indicating signals.

A control system for automatically controlling a vehicle's turn indicators is disclosed in accordance with the present invention herewith. The control system comprises a pair of light source and reader located a certain distance away from the rotation shaft connected to the steering wheel of the vehicle; and a graduated color means mounted on the shaft. The system further comprises a control unit receiving the indicating signals from the micro-processor which connects to the sensor and thereby controlling corresponding turning indicators to turn on or off automatically.

The light source emits light beams to the graduated color means; the light reader receives the corresponding reflected light beams and reads out the light intensity changes of the reflected light beam; the micro-processor calculates the turning angle of the rotation shaft according to the light intensity changes of the reflected light beams and producing the corresponding indicating signals; and the control unit automatically controls corresponding turn indicators or lamps of the vehicle to turn on or off according to the indicating signals.

Furthermore, the present invention also can be used as a method for detecting the movement of an object. The method comprises the steps of: step 1: mount a graduated color means or print a graduated color area onto the object whereby the graduated color means or area can move with the object synchronously; step 2: locate a pair of light source and reader beside the object; step 3: the sensor emits a first light beam to the graduated color means or area and receives a first reflected light beam; step 4: the sensor emits a second light beam to the graduated color means or area and receives a second reflected light beam; and step 5: calculating the movement of the object according to the light intensity changes of the first and second reflected light beams.

The graduated color means or area of step 1 may be attached or printed onto the surface of the object for forming a closed loop along its periphery so as to rotate with the object synchronously whereby the sensor can detect the turning angle of the object by reading the light intensity changes of the first and second reflected light beams back from the graduated color means in steps 3 and 4.

The graduated color means or area may also attached or printed onto the surface of the object so as to move synchronously with the object whereby the sensor can detect the linear movement and/or rotation movement of the object by reading the light intensity changes of the first and second reflected light beams back from the graduated color means in steps 3 and 4. The sensor also connects to a micro-processor for calculating the linear movement and/or rotation movement distance of the object according to the light intensity changes of the first and second reflected light beams.

The present invention may also be applied in a robot system to automatically control the precise positions of the robot arm thereof as detailed in the corresponding embodiment description below.

Furthermore, the positions of the graduated color means and the light source and reader pair of the present invention can be exchanged. That is, the light source and reader pair can be positioned on the shaft of the vehicular control system and the graduated color means can be positioned a certain distance away from the shaft.

Other objects, advantages and novel features of the invention will become more apparent from the following detailed description when taken in conjunction with the accompanying drawings.

### BRIEF DESCRIPTION OF THE DRAWINGS

Fig. 1 is an exploded view illustrating one embodiment of the structure of the steering wheel assembly of a vehicular turning indicator control system to which the present invention is applied; and
Fig. 2 is a block diagram illustrating the principle of the present invention.
Fig. 3 consists of three views illustrating another embodiment of the present invention.

### DETAILED DESCRIPTION OF PREFERRED EMBODIMENT

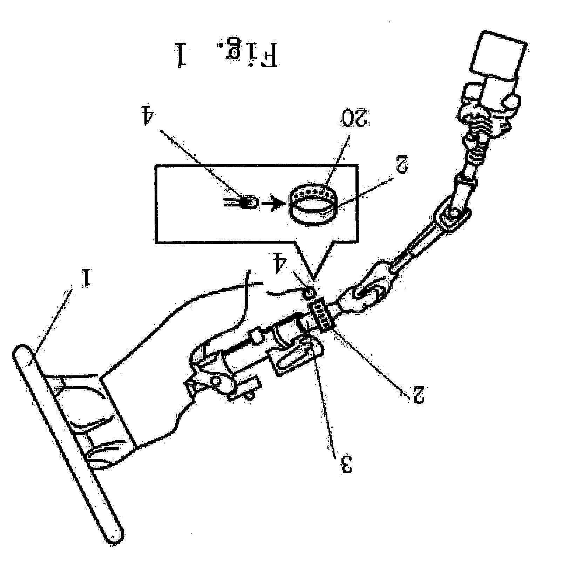

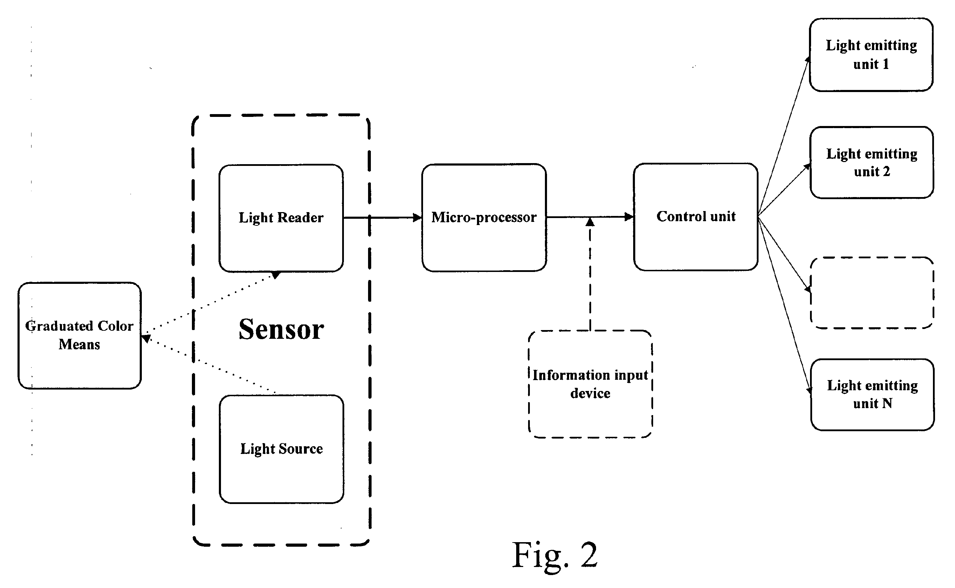

Referring to Fig. 1, a detecting device 4 for detecting the turning angle of a rotation shaft 3 in accordance with the present invention is separated a certain distance away from the shaft 3. The device 4 comprises a light source (Fig. 2) for emitting light beams to a graduated color means 2 mounted on the shaft 3 and a light reader (Fig. 2) for reading the corresponding reflected light beams back from the graduated color means 2.

The graduated color means 2 is a longitudinal sheet of film and attached onto the surface of the shaft 3 in its circumference direction thereby rotating with the shaft 3 synchronously. The graduated color means 2 may be made of other suitable soft materials as well and also can be printed onto the shaft directly.

A serial of color points 20 with different hues, values and/or chromas are formed on the graduated color means 2 along its longitudinal direction. The color points 20 are arranged so as to the reflectivity thereof vary according to the requirements of the sensor. The color points 20 of the graduated means 2 can vary from light colors to dark colors. For example, they may be consisted of white, grayish, grey, dark grey and black points.

The detecting device 4 also connects to a micro-processor (Fig. 2)) for calculating the turning angle of the rotation shaft 3 according to the light intensity changes of the corresponding reflected light beams and producing corresponding indicating signals. The reader can be of CMOS array chip and the light source may be infrared or white light LED.

Hence, the principle of the present invention can be illustrated as: the light source of the detecting device 4 firstly emits a first light beam to a first color point of the graduated color means 2, and then the first color point will instantly reflect a first reflected light beam back to the light reader of the detecting device 4. Since the graduated color means 2 is mounted on the rotation shaft 3 thereby rotating synchronously with the shaft 3, when the device 4 emits a second light beam to the graduated color means 2, the second light beam will reach a second color point which is different from the first color point as the shaft 3 is turning and will instantly reflect a corresponding second reflected light beam to the device 4.

As the color points 20 of the graduated color means 2 are arranged along the longitudinal direction thereof and are consisted of a plurality of different color blocks whose reflectivity are different from each other. So, the light intensities of the first and second reflected light beams from the graduated means 2 back to the device 4 will change.

Since we can measure the radius of the shaft 3, the distance between two adjacent color points 20, the light intensity difference between the first and second reflected light beams, as well as the time value between the emitting of the first and second light beams, the micro-processor of the device 4 can thus calculate the corresponding turning angle of the shaft 3 according to the light intensity difference or the wavelength difference and so on between the first and second reflected light beams by a pre-establishing proper mathematical algorithm for that.

Furthermore, all the relevant parameters including the radius of the shaft 3, the distance between two adjacent color points 20, the distance between the device 4 and the graduated color means 2, and the reflectivity difference between two adjacent color points 20 can be pre-designed, and the time interval of emitting two light beams to the graduated color means 2 also can be well controlled according to different requirements.

Moreover, we can arrange the color points 20 of the graduated color means 2 properly so that the reflectivity of the color points 20 can meet the requirement of a pre-set mathematical algorithm of the micro-processor. Normally, the color points 20 can be arranged in the longitudinal direction of the graduated color means 2 and the distances between each adjacent two color points can be adjusted to be the same and meet the requirement of said pre-set mathematical algorithm.

In sum, the device 4 of the present invention can be used to detect the turning angles of various rotation shafts with different diameters by properly arranging the graduated color means 2, the distance between the device 4 and the graduated color means 2, and the time interval value of emitting first and second light beams to the graduated color means 2 theoretically.

The micro-processor can thus calculate the turning angle which the object has moved during the time interval of the sensor's emitting the first and second light beams according to the light intensity changes of the corresponding reflected light beams, or actually it is the time interval between the first light beam reaches the graduated color means 2 and the second light beam reaches the graduated color means 2.

Therefore, in accordance with the present invention, a detecting device for detecting the turning angle of a rotation shaft can thus be provided to combine the light source, light reader and the graduated color means 2 together. The detecting device comprises the graduated color means 2 mounted on the shaft 3 and the pair of light source and reader separated a certain distance away from the shaft 3 for detecting the graduated color means 2. The device 4 includes a light source, a light reader and a micro-processor.

The light source emits a light beam to the graduated color means; the light reader receives the corresponding reflected light beam and reads out the light intensity changes of the reflected light beam. The micro-processor then calculates the turning angle of the rotation shaft according to the light intensity changes of the reflected light beam on basis of said mathematical algorithm as discussed above.

As can be seen from the above discussion, the present invention inherently contains a method for detecting the turning angle of a rotation shaft. The method may comprise the steps of:
step 1: mount the graduated color means 2 onto the shaft 3 thereby rotating with the shaft 3 synchronously;
step 2: locate the detecting device 4 beside the shaft 3;
step 3: the detecting device 4 emits a first light beam to the graduated color means 2 and receives a first reflected light beam;
step 4: the detecting 4 emits a second light beam to the graduated color means 2 and receives a second reflected light beam; and
step 5: calculating the turning angle of the shaft 3 according to the light intensity changes of the first and second reflected light beams.

In step 1, the graduated color means 2 is a longitudinal sheet of film and attached onto the surface of the shaft 3 in its circumference direction thereby rotating with the shaft 3 synchronously. The graduated color means 2 forms a serial of color points 20 thereon along its longitudinal direction and the color points 20 are arranged so as to the reflectivity thereof vary according to the requirements of the device 4.

In step 2, the device 4 is separated a certain distance away from the shaft 3 for detecting the graduated color means 2. The device 4 includes a light source and a light reader, among which the light source of steps 3 and 4 emits first and second light beams in turn to the graduated color means 2; and the light reader of steps 3 and 4 receives the corresponding first and second reflected light beams and reads out the light intensity changes of the reflected light beam. In step 5, the device 4 calculates the turning angle of the rotation shaft 3 according to the light intensity changes of the first and second reflected light beams by a micro-processor thereof, and producing corresponding indicating signals.

From the above illustrations, we can see that the device 4 in accordance with the present invention may also used to detect a linear or other kinds of movements of a moving object other than detecting the turning angle of a rotation shaft.

When used to detect the movement of an object which might is rotating or moving linearly, the device 4 is still separated a certain distance away from the object in accordance with the present invention.

The light source of the device 4 emits first and second light beams to the graduated color means 2 mounted on the object instead of the shaft 3; the light reader of the device 4 receives corresponding first and second reflected light beams; and the micro-processor of the device 4 can calculate different moving status of the object in the time interval of the sensor's emitting the first and second light beams according to the light intensity changes of the first and second reflected light beams on basis of said corresponding pre-set mathematical algorithms.

If it is to detect the turning movement of an object, the graduated color means 2 is attached onto the surface of the object for forming a closed loop along its periphery so as to rotate with the object synchronously. The device 4 then detect the turning angle of the object by reading the light intensity changes of the reflected light beams back from the graduated color means 2 just as above discussed.

If the object is moving linearly, the graduated color means 2 is attached onto the surface of the object so as to move synchronously with the object. The device 4 can detect the linear movement of the object by reading the light intensity changes of the reflected light beams back from the graduated color means 2. The micro-processor of the device 4 can also calculate the linear distance which the object has moved during the time interval of the sensor's emitting the first and second light beams according to the light intensity changes of the corresponding reflected light beams, or actually it is the time interval between the first light beam reaches the graduated color means 2 and the second light beam reaches the graduated color means 2. And the micro-processor can also calculate the speed or acceleration of the object base on the distance of the movement and the time interval of the sensor's emitting and receiving the first and second light beams.

Just as the afore-mentioned case, a method for detecting the movement of an object by adopting the device 4 in accordance with the present invention can be inherently implied herewith.

The method includes the steps of:
step 1: mount a graduated color means onto the object whereby the graduated color means can move with the object synchronously;
step 2: locate a sensor beside the object;
step 3: the sensor emits a first light beam to the graduated color means and receives a first reflected light beam;
step 4: the sensor emits a second light beam to the graduated color means and receives a second reflected light beam; and
step 5: calculating the movement of the object according to the light intensity changes of the first and second reflected light beams.

If the object is turning, the graduated color means 2 is attached onto the surface of the object for forming a closed loop along its periphery so as to rotate with the object synchronously. The device 4 can detect the turning angle of the object by reading the light intensity changes of the first and second reflected light beams back from the graduated color means 2 in steps 3 and 4. The graduated means 2 may also form a not-closed loop along the object's periphery when it permits such an arrangement.

When a linear movement is to be detected, the graduated color means 2 is attached onto the surface of the object so as to move synchronously with the object. The micro-processor of the device 4 can also calculate the linear distance which the object has moved during the time interval of the device's emitting the first and second light beams according to the light intensity changes of the corresponding reflected light beams, or actually it is the time interval between the first light beam reaches the graduated color means 2 and the second light beam reaches the graduated color means 2.

The device 4 of the present invention can also be applied in a control system for automatically controlling a vehicle's turn indicators as detailed below and with reference to Fig. 2.

The control system comprises the device 4 located a certain distance away from the rotation shaft 3 connected to the steering wheel 1 (Fig. 1) of the vehicle, and the graduated color means 2 mounted on the shaft 3. The system further comprises a control unit receiving the indicating signals from the micro-processor of the device 4 and thereby controlling corresponding turning indicators (light emitting units 1, 2... till n) to turn on or off automatically according to the indicating signals produced by the micro-processor.

In addition, the system can also have an information input device as indicated in Fig. 2. The information input device may apply according instruction information, which may be input by the driver of the vehicle at random, to the control unit, and the control unit will produce a signal to the light emitting units 1, 2...n on the basis of the combination of the indicating signals by the micro-processor and the randomly input information signals by the information input device according to its rules or calculations programs inside as pre-set. The information input device can also be used to input information such as the vehicle's speed or the acceleration thereof by the driver or by other proper device installed in the vehicle.

The light source of the device 4 emits light beams to the graduated color means; the light reader receives the corresponding reflected light beams and reads out the light intensity changes of the reflected light beam; the micro-processor calculates the turning angle of the rotation shaft according to the light intensity changes of the reflected light beams and producing the corresponding indicating signals; and the control unit automatically controls corresponding turn indicators or lamps of the vehicle to turn on or off according to the indicating signals.

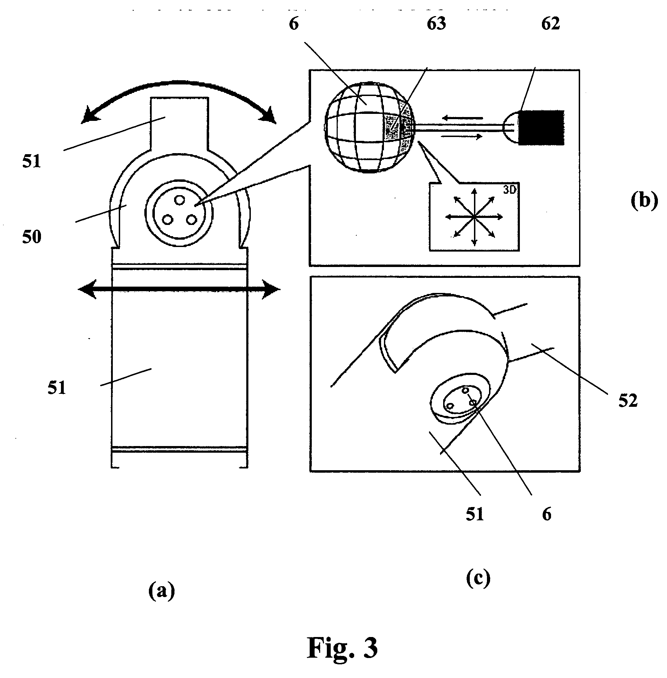

Figs. 3(a), (b) and (c) illustrate another embodiment in accordance with the present invention. In this embodiment, the present invention is applied in a robot system and includes a ball 6 and a pair of light source and reader 62. The ball 6 is fixed on a stationary portion of a pivotal section 50 (for example, it may be a hinge) which connects a robot arm 52 to the main body 51 of the robot system (not shown). The light source and reader pair 62 is mounted on a movable portion of the hinge 50 which rotates or moves together with the robot arm 52 synchronously.

The outer surface of the ball 6 is arranged thereon with many color blocks 63, and the hues, values and/or chromas of the color blocks 63 are pre-arranged different from each other. Hence, the ball 6 is essentially the graduated color means 2 as described above.

In operation, the robot arm 52 rotates around the hinge 50, the movable portion of the hinge 50 also moves synchronously so that the light source and reader pair 62 rotates with the robot arm 52 synchronously while the ball 6 remains unmoved. Therefore, as the light source emits light beams to the outer surface of the ball 6, and the reader will receive the reflected light beams back from different color blocks 63 of the ball 6, whereby the micro-processor can produce different indicating signals according to the reading signals from the reader in substantially the same way as illustrated above.

Furthermore, the positions of the graduated color means and the light source and reader pair of the present invention can be exchanged. That is, the light source and reader pair 4 can be positioned on the shaft 3 of the vehicular control system and the graduated color means 2 can be positioned a certain distance away from the shaft 3. The light source emits light beams to the graduated color means 2 and the reader receives the reflected light beams back from the different points 20 of the graduated color means 2. The micro-processor can produce different indicating signals according to the reading signals from the reader in substantially the same way as illustrated above.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A sensor for detecting the turning angle of a rotation shaft and being separated a certain distance away from the shaft, comprising a light source for emitting light beams to a graduated color means mounted on the shaft, and a light reader for reading the reflected light beams back from the graduated color means.

2. The sensor for detecting the turning angle of a rotation shaft as claimed in claim 1, wherein the graduated color means is a longitudinal sheet of film and attached onto the surface of the shaft in its circumference direction thereby rotating with the shaft synchronously.

3. The sensor for detecting the turning angle of a rotation shaft as claimed in claim 2, wherein the graduated color means forms a serial of color points thereon along its longitudinal direction.

4. The sensor for detecting the turning angle of a rotation shaft as claimed in claim 3, wherein the color points are arranged so as to the reflectivity thereof vary according to the requirements of the sensor.

5. The sensor for detecting the turning angle of a rotation shaft as claimed in claim 4, wherein the color points of the graduated means can vary its hues, values, and/or chromas, like from light colors to dark colors in different hues, values and/or chromas.

6. The sensor for detecting the turning angle of a rotation shaft as claimed in all the above claims, wherein the sensor also has a micro-processor for calculating the turning angle of the rotation shaft according to the light intensity changes of the reflected light beams and producing corresponding signals.

7. A detecting device for detecting the turning angle of a rotation shaft comprising a graduated color means mounted on the shaft and a sensor separated a certain distance away from the shaft for detecting the graduated color means.

8. The detecting device for detecting the turning angle of a rotation shaft as claimed in claim 7, wherein the graduated color means is attached onto the surface of the shaft in its circumference direction thereby rotating with the shaft synchronously.

9. The detecting device for detecting the turning angle of a rotation shaft as claimed in claim 7 or 8, wherein the graduated color means is adhibitted onto the shaft in its circumference direction thereby rotating with the shaft synchronously.

10. The detecting device for detecting the turning angle of a rotation shaft as claimed in claim 8, wherein the graduated color means is a longitudinal sheet of film.

11. The detecting device for detecting the turning angle of a rotation shaft as claimed in claim 10, wherein the graduated color means forms a serial of color points thereon along its longitudinal direction.

12. The detecting device for detecting the turning angle of a rotation shaft as claimed in claim 11, wherein the color points are arranged so as to the reflectivity thereof vary according to the requirements of the sensor.

13. The detecting device for detecting the turning angle of a rotation shaft as claimed in claim 12, wherein the color points of the graduated means can vary its hues, values, and/or chromas, like from light colors to dark colors in different hues, values and/or chromas.

14. The detecting device for detecting the turning angle of a rotation shaft as claimed in claim 12 or 13, wherein the color points can be consisted of white, grayish, grey, dark grey and black points.

15. The detecting device for detecting the turning angle of a rotation shaft as claimed in claims 7 or 8 or 10 or 11 or 12 or 13, wherein the sensor emits light beams to the graduated color means and receives corresponding reflected light beams.

16. The detecting device for detecting the turning angle of a rotation shaft as claimed in claims 15, wherein the sensor includes a light source and a light reader, among which the light source emits light beams to the graduated color means and the light reader receives corresponding reflected light beams and reads out the light intensity changes of the reflected light beams.

17. The detecting device for detecting the turning angle of a rotation shaft as claimed in claim 16, wherein the sensor also has a micro-processor for calculating the turning angle of the rotation shaft according to the changes of the reflected light beams and producing corresponding signals.

18. A vehicular control system for automatically controlling a vehicle's turn indicators to turn on or off, comprising:
a detecting device including a sensor and a graduated color means mounted on the shaft connected to the steering wheel of the vehicle; and
a turn indicator controlling device electrically connected with the detecting device and control proper turn indicators to turn on or off according to indicating signals from the sensor of the detecting device.

19. The vehicular control system for automatically controlling a vehicle's turn indicators to turn on or off as claimed in claim 18, wherein the sensor is separated a certain distance away from the shaft for detecting the graduated means.

20. The vehicular control system for automatically controlling a vehicle's turn indicators to turn on or off as claimed in claim 19, wherein the graduated color means is attached onto the surface of the shaft in its circumference direction thereby rotating with the shaft synchronously.

21. The vehicular control system for automatically controlling a vehicle's turn indicators to turn on or off as claimed in claim 20, wherein the graduated color means is a longitudinal sheet of film.

22. The vehicular control system for automatically controlling a vehicle's turn indicators to turn on or off as claimed in claim 21, wherein the graduated color means forms a serial of color points thereon along its longitudinal direction.

23. The vehicular control system for automatically controlling a vehicle's turn indicators to turn on or off as claimed in claim 22, wherein the color points are arranged so as to the reflectivity thereof vary according to the requirements of the sensor.

24. The vehicular control system for automatically controlling a vehicle's turn indicators to turn on or off as claimed in claim 23, wherein the color points of the graduated color means can vary from light colors to dark colors in different hues, values and/or chromas.

25. The vehicular control system for automatically controlling a vehicle's turn indicators to turn on or off as claimed in claim 24, wherein the color points can be consisted of white, grayish, grey, dark grey and black points.

26. The vehicular control system for automatically controlling a vehicle's turn indicators to turn on or off as claimed in claims 18 or 19 or 20, wherein the sensor includes a light source and a light reader, among which the light source emits light beams to the graduated color means and the light reader receives corresponding reflected light beams and reads out the changes of the reflected light beams.

27. The vehicular control system for automatically controlling a vehicle's turn indicators to turn on or off as claimed in claim 26, wherein the sensor also has a micro-processor for calculating the turning angle of the rotation shaft according to the changes of the reflected light beams and producing corresponding indicating signals.

28. The vehicular control system for automatically controlling a vehicle's turn indicators to turn on or off as claimed in claim 27, wherein the turn indicator controlling device comprises a control unit receiving the indicating signals from the micro-processor of the sensor and thereby controlling corresponding turning indicators to turn on or off automatically.

29. A control system for automatically controlling a vehicle's turn indicators to turn on or off, comprising:
a sensor located a certain distance away from the rotation shaft connected to the steering wheel of the vehicle; and
a graduated color means mounted on the shaft;
wherein the sensor emits light beams to the graduated color means and reads the changes of corresponding reflected light beams thereby producing corresponding indicating signals to automatically control according turn indicators to turn or off.

30. The vehicular control system for automatically controlling a vehicle's turn indicators to turn on or off as claimed in claim 29, wherein the system further comprises a control unit receiving the indicating signals from the micro-processor of the sensor and thereby controlling corresponding turning indicators to turn on or off automatically.

31. The vehicular control system for automatically controlling a vehicle's turn indicators to turn on or off as claimed in claims 29 or 30, wherein the sensor includes a light source and a light reader, among which the light source emits light beams to the graduated color means and the light reader receives corresponding reflected light beams and reads out the light intensity changes of the reflected light beams.

32. The vehicular control system for automatically controlling a vehicle's turn indicators to turn on or off as claimed in claim 31, wherein the sensor also has a micro-processor for calculating the turning angle of the rotation shaft according to the changes of the reflected light beams and producing the corresponding indicating signals.

33. The vehicular control system for automatically controlling a vehicle's turn indicators to turn on or off as claimed in claim 29 or 30 or 31, wherein the graduated color means is attached onto the surface of the shaft in its circumference direction thereby rotating with the shaft synchronously.

34. The vehicular control system for automatically controlling a vehicle's turn indicators to turn on or off as claimed in claim 33, wherein the graduated color means is a longitudinal sheet of film.

35. The vehicular control system for automatically controlling a vehicle's turn indicators to turn on or off as claimed in claim 34, wherein the graduated color means forms a serial of color points thereon along its longitudinal direction.

36. The vehicular control system for automatically controlling a vehicle's turn indicators to turn on or off as claimed in claim 35, wherein the color points are arranged so as to the reflectivity thereof vary according to the requirements of the sensor.

37. The vehicular control system for automatically controlling a vehicle's turn indicators to turn on or off as claimed in claim 36, wherein the color points of the graduated color means can vary from light colors to dark colors in different hues, values and/or chromas.

38. The vehicular control system for automatically controlling a vehicle's turn indicators to turn on or off as claimed in claim 37, wherein the color points can vary from white, grayish, grey, dark grey and black points.

39. A sensor for detecting the movement, speed and/or acceleration of an object and being separated a certain distance away from the object, comprising a light source for emitting light beams to a graduated color area on the object, and a light reader for receiving corresponding reflected light beams and reading the changes of the reflected light beams thereby detecting the movement, speed and/or acceleration of the object.

40. The sensor for detecting the movement, speed and/or acceleration of an object as claimed in claims 39, wherein the sensor can detect the movement of the object by reading the changes of intensity or the wavelength of the reflected light beams back from the graduated color area.

41. The sensor for detecting the movement, speed and/or acceleration of an object as claimed in claim 39 or 40, wherein the graduated color area is attached onto the surface of the object so as to move synchronously with the object whereby the sensor can detect the movement of the object by reading the changes of the reflected light beams back from the graduated color area.

42. The sensor for detecting the movement, speed and/or acceleration of an object as claimed in claim 41, wherein the graduated color area is attached onto the surface of the object for forming a closed loop along its periphery so as to rotate with the object synchronously whereby the sensor can detect the turning angle of the object by reading the changes of the reflected light beams back from the graduated color area.

43. The sensor for detecting the movement, speed and/or acceleration of an object as claimed in claims 42, wherein the sensor also has a micro-processor for calculating the turning angle of the object according to the light intensity changes of the reflected light beams.

44. The sensor for detecting the movement, speed and/or acceleration of an object as claimed in claims 43, wherein the graduated color area may also form a non-closed loop along the object's periphery.

45. The sensor for detecting the movement, speed and/or acceleration of an object as claimed in claim 41, wherein the graduated color means is attached onto the surface of the object so as to move synchronously with the object whereby the sensor can detect the linear movement, speed and/or acceleration of the object by reading the changes of the reflected light beams back from the graduated color area.

46. The sensor for detecting the movement, speed and/or acceleration of an object as claimed in claims 45, wherein the sensor also has a micro-processor for calculating the linear movement distance of the object according to the changes of the reflected light beams.

47. The sensor for detecting the movement, speed and/or acceleration of an object as claimed in claim 39 or 40 or 41, wherein the graduated color area is a sheet of film attached onto the surface of the object.

48. The sensor for detecting the movement, speed and/or acceleration of an object as claimed in claim 47, wherein the graduated color area forms a serial of color points thereon along its longitudinal direction.

49. The sensor for detecting the movement, speed and/or acceleration of an object as claimed in claim 48, wherein the color points are arranged so as to the reflectivity thereof vary according to the requirements of the sensor.

50. The sensor for detecting the movement, speed and/or acceleration of an object as claimed in claim 50, wherein the color points of the graduated area can vary from light colors to dark colors in different hues, values, and/or chromas.

51. A method of detecting the turning angle of a rotation shaft, comprising the steps of:
step 1: create a graduated color means onto the shaft thereby rotating with the shaft synchronously;
step 2: locate a sensor beside the shaft;
step 3: the sensor emits a first light beam to the graduated color means and receives a first reflected light beam;
step 4: the sensor emits a second light beam to the graduated color means and receives a second reflected light beam; and
step 5: calculating the turning angle of the shaft according to the light intensity changes of the first and second reflected light beams.

52. The method of detecting the turning angle of a rotation shaft as claimed in claim 51, wherein in step 1, the graduated color means is attached onto the surface of the shaft in its circumference direction thereby rotating with the shaft synchronously.

53. The method of detecting the turning angle of a rotation shaft as claimed in claim 52, wherein in step 1, the graduated color means is a longitudinal sheet of film.

54. The method of detecting the turning angle of a rotation shaft as claimed in claim 52, wherein in step 1, the graduated color means forms a serial of color points thereon along its longitudinal direction.

55. The method of detecting the turning angle of a rotation shaft as claimed in claim 53, wherein in step 1, the color points are arranged so as to the reflectivity thereof vary according to the requirements of the sensor.

56. The method of detecting the turning angle of a rotation shaft as claimed in claim 54, wherein in step 1, the color points of the graduated color means can vary from light colors to dark colors.

57. The method of detecting the turning angle of a rotation shaft as claimed in claim 55, wherein in step 1, the color points can be consisted of white, grayish, grey, dark grey and black points in different hues, values, and/or chromas.

58. The method of detecting the turning angle of a rotation shaft as claimed in claim 50, wherein in step 2, the sensor is separated a certain distance away from the shaft for detecting the graduated color means.

59. The method of detecting the turning angle of a rotation shaft as claimed in claim 57, wherein in step 4, the sensor includes a light source and a light reader, among which the light source emits a light beam to the graduated color means and the light reader receives the corresponding reflected light beam and reads out the changes of the reflected light beam.

60. The method of detecting the turning angle of a rotation shaft as claimed in claim 58, wherein in step 5, the sensor also calculates the turning angle of the rotation shaft according to the changes of the first and second reflected light beams by a micro-processor thereof.

61. A method of detecting the movement, speed or acceleration of an object, comprising the steps of:
step 1: make a graduated color means onto the object whereby the graduated color means including at least three different points with different hues, values and/or chromas between them, and can move with the object synchronously;
step 2: locate a sensor beside the object;
step 3: the sensor emits a first light beam to the graduated color means and receives a first reflected light beam;
step 4: the sensor emits a second light beam to the graduated color means and receives a second reflected light beam; and
step 5: calculating the movement, speed or acceleration of the object according to the light intensity changes of the first and second reflected light beams.

62. The method of detecting the movement, speed or acceleration of an object as claimed in claim 60, wherein in step 1, the graduated color means is attached onto the surface of the object so as to move synchronously with the object whereby the sensor can detect the movement, speed and/or acceleration of the object by reading the changes of the first and second reflected light beams back from the graduated color means in steps 3 and 4.

63. The method of detecting the movement, speed or acceleration of an object as claimed in claim 61, wherein in step 1, the graduated color means is attached onto the surface of the object for forming a closed loop along its periphery so as to rotate with the object synchronously whereby the sensor can detect the turning angle of the object by reading the changes of the first and second reflected light beams back from the graduated color means in steps 3 and 4.

64. The method of detecting the movement, speed or acceleration of an object as claimed in claims 62, wherein the sensor also has a micro-processor for calculating the turning angle of the object according to the changes of the first and second reflected light beams.

65. The method of detecting the movement, speed or acceleration of an object as claimed in claims 62, wherein The graduated means 2 may also form a non-closed loop along the object's periphery when it permit such an arrangement.

66. The method of detecting the movement, speed or acceleration of an object as claimed in claim 61, wherein in step 1, the graduated color means is attached onto the surface of the object so as to move synchronously with the object whereby the sensor can detect the linear and /or non linear movement of the object by reading the changes of the first and second reflected light beams back from the graduated color means in steps 3 and 4.

67. The method of detecting the movement, speed or acceleration of an object as claimed in claims 65, wherein the sensor also has a micro-processor for calculating the movement distance, speed and/or acceleration of the object according to the changes of the first and second reflected light beams.

68. The method of detecting the movement, speed or acceleration of an object as claimed in claim 60 or 61, wherein in step 1, the graduated color means is a sheet of film attached onto the surface of the obj ect.

69. The method of detecting the movement, speed or acceleration of an object as claimed in claim 67, wherein in step 1, the graduated color means forms a serial of color points thereon.

70. The method of detecting the movement, speed or acceleration of an object as claimed in claim 68, wherein in step 1, the color points are arranged so as to the reflectivity thereof vary according to the requirements of the sensor.

71. The method of detecting the movement, speed or acceleration of an object as claimed in claim 69, wherein in step 1, the color points of the graduated means can vary from light colors to dark colors in different hues, values and/or chromas.

72. A control system for automatically controlling a vehicle's turn indicators to turn on or off, comprising:
a sensor mounted on the rotation shaft connected to the steering wheel of the vehicle so as to rotate synchronously with the shaft; and
a graduated color means located a certain distance away from the rotation shaft and can receive light beams emitted by the sensor;
wherein the sensor emits light beams to the graduated color means and reads the changes of corresponding reflected light beams thereby producing corresponding indicating signals to automatically control according turn indicators to turn or off.

73. The vehicular control system for automatically controlling a vehicle's turn indicators to turn on or off as claimed in claim 72, wherein the sensor also has a micro-processor for calculating the turning angle of the rotation shaft according to the changes of the reflected light beams and producing the corresponding indicating signals.

74. The vehicular control system for automatically controlling a vehicle's turn indicators to turn on or off as claimed in claims 72 or 73, wherein the sensor includes a light source and a light reader, among which the light source emits light beams to the graduated color means and the light reader receives corresponding reflected light beams and reads out the changes of the reflected light beams.

75. The vehicular control system for automatically controlling a vehicle's turn indicators to turn on or off as claimed in claims 74, wherein the light reader receives corresponding reflected light beams and reads out the light intensity or wavelength changes of the reflected light beams.

76. The vehicular control system for automatically controlling a vehicle's turn indicators to turn on or off as claimed in claim 75, wherein the system further comprises a control unit receiving the indicating signals from the micro-processor of the sensor and thereby controlling corresponding turning indicators to turn on or off automatically.

77. The vehicular control system for automatically controlling a vehicle's turn indicators to turn on or off as claimed in claim 77, wherein the graduated color means is a longitudinal sheet of film.

78. The vehicular control system for automatically controlling a vehicle's turn indicators to turn on or off as claimed in claim 77, wherein the graduated color means forms a serial of color points thereon along its longitudinal direction.

79. The vehicular control system for automatically controlling a vehicle's turn indicators to turn on or off as claimed in claim 78, wherein the color points are arranged so as to the reflectivity thereof vary according to the requirements of the sensor.

80. The vehicular control system for automatically controlling a vehicle's turn indicators to turn on or off as claimed in claim 79, wherein the color points of the graduated color means can vary from light colors to dark colors in different hues, values and/or chromas.

81. The vehicular control system for automatically controlling a vehicle's turn indicators to turn on or off as claimed in claim 80, wherein the color points can vary from white, grayish, grey, dark grey and black points.

82. A robot arm control device for a robot system having a robot arm and a main body to which the robot arm is connected pivotally via a pivotal section, the control device comprising a emitting means and a reflection means, one of them located on a stationary portion of the pivotal section, and the other is mounted on a movable portion of the pivotal section which rotates or moves together with the robot arm synchronously.

83. The robot arm control device for a robot system as claimed in claim 82, wherein the emitting means is a light source potion.

84. The robot arm control device for a robot system as claimed in claim 83, wherein the emitting means including a light reader potion for receiving the reflected light beams from the reflection means.

85. The robot arm control device for a robot system as claimed in claim 84, wherein the reflection means including at least a cambered surface.

86. The robot arm control device for a robot system as claimed in claim 85, wherein the outer surface of the reflection means is arranged thereon with a plurality of blocks.

87. The robot arm control device for a robot system as claimed in claim 86, wherein the surface quality, hues, values and/or chromas of the blocks are pre-arranged different from each other so that the reader reads out the changes of the reflected light beams back from the reflection means after the light source emits light beams to the reflection means since only one of the reflection means and the emitting means is rotates with the robot arm synchronously.

88. The robot arm control device for a robot system as claimed in claim 87, wherein the control device further comprises a micro-processor connected with the light source and reader pair which can produce corresponding indicating signals to control the movement of the robot arm.
